# EUROPÄISCHE PATENTSCHRIFT

(11) **EP 2 565 225 B1**
(45) Veröffentlichungstag und Bekanntmachung des Hinweises auf die Patenterteilung: **16.04.2014**
(21) Anmeldenummer: 11179570.4
(22) Anmeldetag: 31.08.2011
(51) Int. Cl.: C08J 9/224, C08K 5/10, C08K 5/12, C08K 5/42

(54) **Beschichtete expandierbare Polymerpartikel**
Coated expandable polymer particle
Particule de polymère extensible revêtue

(43) Veröffentlichungstag der Anmeldung: 06.03.2013
(73) Patentinhaber: BASF SE, 67056 Ludwigshafen (DE)
(72) Erfinder: Däschlein, Christian, 68199 Mannheim (DE); Bellin, Ingo, 68307 Mannheim (DE); Hahn, Klaus, 67281 Kirchheim (DE); Hartenstein, Markus, 76761 Rülzheim (DE); Keller Andreas, 67459 Böhl-Iggelheim (DE); Ruckdäschel, Holger, 67487 St Martin (DE)

(56) Entgegenhaltungen:
- EP-A1- 1 206 964
- EP-A2- 0 027 609
- GB-A- 1 266 863

## Beschreibung

Die Erfindung betrifft beschichtete expandierbare Polymerpartikel, ein Verfahren zu deren Herstellung sowie Schaumformkörper, die aus den erfindungsgemäßen Polymerpartikeln erhältlich sind, und deren Verwendung.

Es ist bekannt, expandierbare Polymerpartikel, insbesondere expandierbares Polystyrol (EPS) mit verschiedenen Beschichtungen zu versetzen, um beispielsweise die Verarbeitbarkeit oder die Eigenschaften der daraus hergestellten Schaumformkörper zu verbessern (siehe z.B. JP-A 63-268 749, JP-A 63-268 750, JP-A 60-206 844, DE-A 19747541, WO-A 97/43334 und DE-A 10 2008 038 916). In der JP-A 60-206 850 sind SAMSAN Granulate beschrieben, die mit Calciumstearat und Dioctylphthalat beschichtet sind. Ziel ist es, eine homogene Oberfläche der aus dem Granulat hergestellten Schaumformteile zu erreichen.

Für EPS werden Glycerintri- und monostearat, Magnesium- und Zinkstearat sowie Kieselsäure als Beschichtung verwendet, um eine bessere Verschweißung und Verarbeitbarkeit des Materials zu gewährleisten. Glycerinstearate und Zitronensäuretristearylester werden häufig als Beschichtungsmittel für EPS eingesetzt, um die Entformzeit zu reduzieren. Obwohl mit diesen Beschichtungen gute Ergebnisse erzielt werden, bleibt doch Raum für Verbesserungen, insbesondere bei Styrolcopolymeren, die einen höheren Anteil (> 10 %) an polaren Comonomeren wie Acrylnitril aufweisen.

Aufgabe war es daher, weitere Beschichtungsmittel für expandierbare Polymerpartikel, insbesondere Styrol(co)polymerpartikel bereitzustellen, mit denen insbesondere die Entformzeit bei der Herstellung entsprechender Schaumformkörper verringert werden kann, ohne die Schaumstoffeigenschaften negativ zu beeinflussen.

Es wurde gefunden, dass bestimmte Weichmacher, wie sie beispielsweise für PVC und Celluloseester benutzt werden, wirkungsvolle Beschichtungsmittel für expandierbare Polymergranulate, insbesondere auf Basis von polaren Styrol(co)polymeren, darstellen, da sie die Entformzeit herabsetzen und gleichzeitig überraschenderweise für eine bessere Biegefestigkeit sorgen.

Gegenstand der Erfindung sind daher expandierbare Polymerpartikel, beschichtet mit einem oder mehreren Weichmachern aus der Gruppe bestehend aus a) einem oder mehreren Alkylestern von Cyclohexancarbonsäuren mit einem Siedepunkt ≥ 160°C, b) einem oder mehreren C₁₀-C₂₁-Alkansulfonsäurephenylestern mit einem Siedepunkt ≥ 150°C und c) Mischungen der Komponenten a) und b).

Weiterhin Gegenstand der Erfindung ist ein Verfahren zur Herstellung der erfindungsgemäßen Polymerpartikel, wobei expandierbare Polymerpartikel durch Besprühen oder Auftrommeln mit den erfindungsgemäß eingesetzten Weichmachern beschichtet werden.

Ebenso Gegenstand der Erfindung sind Schaumformkörper, insbesondere mit einer Dichte von 10 bis 150 g/l, erhältlich aus den erfindungsgemäßen Polymerpartikeln, sowie deren Verwendung, insbesondere in Form von Verbundbauteilen, enthaltend insbesondere einen erfindungsgemäßen Schaumformkörper als Kernschicht und mindestens eine Deckschicht, im Möbelbau, der Bauindustrie, im Messebau, der Automobilindustrie, im Boots- und Schiffsbau und als Kernmaterial in Windkraftanlagen.

Der Einsatz von erfindungsgemäßen Weichmachern führt, insbesondere bei Styrol(co)polymerpartikeln zu verkürzten Entformzeiten und zu einer höheren Biegefestigkeit der aus den expandierbaren Polymerpartikeln erhältlichen Schaumformkörper.

Erfindungsgemäß wird der Begriff "Weichmacher" im Sinne der DIN 55945 (Dezember 1988) verwendet und bezeichnet somit "flüssige oder feste, indifferente organische Substanzen mit geringem Dampfdruck, überwiegend solche esterartiger Natur. Sie können ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden. Weichmacher verleihen den mit ihnen hergestellten Gebilden bzw. Überzügen bestimmte angestrebte physikalische Eigenschaften, wie zum Beispiel erniedrigte Einfriertemperaturen, erhöhtes Formveränderungsvermögen, erhöhte elastische Eigenschaften, verringerte Härte und gegebenenfalls gesteigertes Haftvermögen".

Bevorzugt sind Weichmacher mit einer niedrigen Viskosität, insbesondere einer dynamischen Viskosität von maximal 4000 mPa·s, bevorzugt im Bereich von 20-200 mPa·s, gemessen bei 20°C nach DIN 51562.

Bevorzugt als Weichmacher sind zum einen Alkylester von Cyclohexancarbonsäuren, insbesondere (C₁-C₁₂)-Alkylester, mit einem Siedepunkt von ≥ 160 °C (Komponente a)). Der Begriff Cyclohexancarbonsäuren umfasst dabei erfindungsgemäß Mono-, Di-, Tri- und Tetracarbonsäuren des Cyclohexans.

Bevorzugt als Weichmacher a) sind Alkylester von Cyclohexancarbonsäuren der Formel (I), 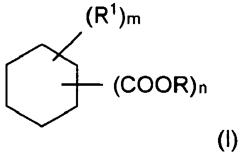 worin die Symbole und Indizes folgende Bedeutungen haben:
R¹ ist C₁-C₁₀-Alkyl oder C₃-C₈-Cycloalkyl; vorzugsweise C₁-C₁₀-Alkyl;
m ist 0, 1, 2 oder 3;
n ist 1, 2, 3 oder 4 und
R ist C₁-C₃₀-Alkyl.

Bevorzugt haben die Symbole und Indizes in der Formel (I) folgende Bedeutungen:
R¹ ist C₁-C₁₀-Alkyl;
m ist 0, 1 oder 2;
n ist 2 oder 3 und
R ist C₆-C₁₂-Alkyl.

Besonders bevorzugt haben die Symbole und Indizes in der Formel (I) folgende Bedeutungen:
R¹ ist C₁-C₁₀-Alkyl;
m ist 0 oder 1;
n ist 2 oder 3 und
R ist C₆-C₁₂-Alkyl.

Ganz besonders bevorzugt haben die Symbole und Indizes in der Formel (I) folgende Bedeutungen:
m ist 0;
n ist 2 und
R ist C₈-C₁₀-Alkyl.

Insbesondere handelt es sich um 1,2-Cyclohexandicarbonsäurediisononylester, wie er zum Beispiel unter der Bezeichnung Hexamoll^{®} DINCH von der BASF SE (Ludwigshafen, Deutschland) vertrieben wird. DINCH, seine Herstellung und Verwendung als Weichmacher sind beispielsweise in der WO99/32427 und der DE 20021356 beschrieben.

Weiterhin bevorzugt als Weichmacher sind Phenylester von (C₁₀-C₂₁)-Alkylsulfonsäuren der Formel (II) (Komponente b)) 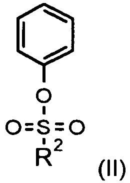 wobei
R² (C₁₀-C₂₁)-Alkyl, bevorzugt (C₁₃-C₁₇)-Alkyl, ist.

Bevorzugte Weichmacher b) sind Mischungen aus (C₁₀-C₂₁)-Alkansulfonsäurephenylestern. Besonders bevorzugt ist dabei eine Mischung, die zu 75 bis 85 % aus einem Gemisch sekundärer Alkansulfonsäurephenylester besteht und zusätzlich 15 bis 25 % sekundäre Alkandisulfonsäurediphenylester sowie 2 bis 3 % nicht sulfonierte Alkane enthält, wobei die Alkylreste überwiegend unverzweigt sind und die Kettenlängen im Bereich von 10 bis 21, hauptsächlich 13 bis 17 Kohlenstoffatomen liegen.

Solche Gemische werden zum Beispiel unter den Mesamoll^{®} Marken von der Lanxess AG (Leverkusen, Deutschland) vertrieben.

Bevorzugt wird der erfindungsgemäß eingesetzte Weichmacher in einer Menge von 0,01 bis 1 Gew.-%, bevorzugt 0,1-0.8 Gew.-%, besonders bevorzugt 0,2-0,5 Gew.-%, auf das expandierbare Granulat aufgebracht.

In einer bevorzugten Ausführungsform ist der Weichmacher an einen oder mehrere, bevorzugt einen porenhaltigen Feststoff adsorbiert, bevorzugt in Mengen von 5 bis 50 Gew.-% (bezogen auf den Feststoff). Bevorzugt beträgt die BET-Oberfläche des porenhaltigen Feststoffs mehr als 30 m²/g (gemessen nach DIN ISO 9277). Der Weichmacher wird in diesen Fällen bevorzugt als Pulvermischung aufgebracht. Als porenhaltige Feststoffe eignen sich beispielsweise feinteilige poröse Kieselsäure und Zeolithe, wie Sipernate, insbesondere Fällungskieselsäure (zum Beispiel Tixosil 38, Rhodia AG, Lyon, Frankreich oder Kieselsäure FK 320, Evonik Degussa GmbH, Inorganic Materials, Hanau, Deutschland) und Zeolith A (Sigma Aldrich GmbH, Schnelldorf , Deutschland)

In einer bevorzugten Ausführungsform sind die expandierbaren Polymerpartikel neben den erfindungsgemäß eingesetzten Weichmachern mit einem oder mehreren weiteren Beschichtungskomponenten beschichtet, wobei diese weiteren Beschichtungskomponenten ebenfalls an einen porenhaltigen Feststoff adsorbiert sein können.

Als weitere Beschichtungskomponenten eignen sich beispielsweise Glycerinester, Zinkstearat und Ester der Zitronensäure. Bevorzugt werden keine weiteren Weichmacher aus der Klasse der Phthalate, Adipate, Azelate, Sebacate und Trimellitate eingesetzt.

Bevorzugt sind die Mono-, Di- und Triglyceride, die aus Glycerin und Stearinsäure, Glycerin und 12-Hydroxystearinsäure und Glycerin und Ricinolsäure erhältlich sind, sowie gemischte Di- und Triglyceride, die neben Stearinsäure, 12-Hydroxystearinsäure und Ricinolsäure aus einer oder zwei Fettsäuren aus der Gruppe Ölsäure, Linolsäure, Linolensäure und Palmitinsäure erhältlich sind.

Besonders bevorzugt sind auch die entsprechenden Handelsprodukte, welche im Allgemeinen Mischungen der entsprechenden Mono-, Di- und Triester darstellen, die auch geringe Anteile an freiem Glycerin und freien Fettsäuren enthalten können, wie beispielsweise Glycerintri- oder Glycerinmonostearate.

Die Beschichtung kann weitere Zusatzstoffe, wie Antistatika, Hydrophobisierungsmittel, Flammschutzmittel, feinteilige Kieselsäure und anorganische Füllstoffe enthalten. Der Anteil dieser Mittel hängt von des Art und Wirkung ab und beträgt für anorganische Füllstoffe in der Regel 0 bis 1 Gew.-%, bezogen auf beschichtete Polymerpartikel.

Als Antistatika kommen beispielsweise Verbindungen wie Emulgator K30 (Gemisch aus sekundären Natriumalkansulfonaten) oder Tensid 743 in Betracht.

Die Beschichtung wird auf die Partikel aufgebracht, die beispielsweise nach den unten beschriebenen Verfahren zugänglich sind. Die Beschichtung kann direkt nach der Herstellung des Partikels ohne vorherige Trocknung, nach Aufarbeitung und Trocknung, auf kompakte Partikel oder auf vorgeschäumte Partikel erfolgen. Bevorzugt erfolgt die Beschichtung nach Aufarbeitung und Trocknung kompakter Partikel oder vorgeschäumter Partikel.

Das Aufbringen von Weichmacher und gewünschtenfalls weiteren Beschichtungskomponenten kann in beliebiger Reihenfolge nacheinander oder simultan erfolgen.

Dabei können die Beschichtungskomponenten gelöst und/oder dispergiert (z.B. suspendiert oder emulgiert) vorliegen. Je nach Art und Menge der Komponenten kann dies durch einfaches Rühren erfolgen. Bei schlecht mischbaren (schlecht dispergierbaren) Komponenten können erhöhte Temperaturen und/oder Drücke sowie gegebenenfalls spezielle Mischvorrichtungen erforderlich sein, um eine gleichmäßige Vermischung zu erzielen. Erforderlichenfalls kann man Hilfsstoffe mit verwenden, welche das Vermischen erleichtern, beispielsweise übliche Netzmittel. Außerdem kann man die erhaltene Beschichtungszusammensetzung durch Zufügen geeigneter Additive, z.B. gebräuchlicher Schutzkolloide oder Antiabsetzmittel, gegen eine Entmischung stabilisieren.

Die Beschichtungskomponenten werden zum Beispiel durch Besprühen oder durch Auftrommeln in üblichen Mischern auf die zu beschichtenden Polymerpartikel aufgebracht. Ebenfalls möglich ist das Eintauchen oder Benetzen der zu beschichtenden Partikel in einer geeigneten Lösung, Dispersion, Emulsion oder Suspension.

Dazu werden übliche Mischer, Sprühvorrichtungen oder Trommelapparaturen verwendet.

Als expandierbare Polymerpartikel eignen sich beispielsweise Styrolpolymere, einschließlich SAN-, ABS-, ASA-, AMSAN-, SB- und HIPS-Polymere, Polyimide, Polysulfone, Polyolefine wie Polyethylen und Polypropylen, Polyacrylate, Polycarbonate, Polyphenylenoxide, Polyamide, Polyethersulfone, Polyetherketone, Polyetheretherketone und Polyethersulfide, jeweils einzeln oder in Mischung als Polymerblends.

Bevorzugt sind Styrolpolymere. Erfindungsgemäß umfasst der Begriff Styrolpolymer Polymere auf Basis von Styrol, alpha-Methylstyrol und Mischungen von Styrol und alpha-Methylstyrol, bevorzugt Styrol; analog gilt dies für den Styrolanteil in SAN, AMSAN, ABS, ASA, MBS und MABS (siehe unten). Erfindungsgemäße Styrolpolymere basieren auf mindestens 50 Gew.-% Styrol und/oder alpha-Methylstyrol-Monomere.

Bevorzugt sind Styrolpolymere auf Basis von a) Styrol, alpha-Methylstyrol oder Mischungen von Styrol und alpha-Methylstyrol und b) Acrylnitril, wie SAN (Styrol-Acrylnitril-Copolymere), AMSAN (alpha-Methylstyrol-Acrylnitril-Copolymere) und SAMSAN (Styrol-alpha-Methylstyrol-Acrylnitril-Copolymere).

Besonders bevorzugt sind Styrolpolymere auf Basis von Styrol und Acrylnitril, insbesondere bestehend aus einpolymerisiertem Styrol und einpolymerisiertem Acrylnitril (SAN).

Das SAN enthält im Allgemeinen 18 bis 40 Gew.-%, bevorzugt 20 bis 35 Gew.-% und insbesondere 25 bis 35 Gew.-% einpolymerisiertes Acrylnitril und im Allgemeinen 60 bis 82 Gew.-%, bevorzugt 65 bis 80 Gew.-% und insbesondere bevorzugt 65 bis 75 Gew.-% einpolymerisiertes Styrol (jeweils bezogen auf SAN).

Erfindungsgemäß eingesetztes SAN weist im Allgemeinen eine Schmelzvolumenrate MVR (220 °C/10 kg) nach ISO 113 im Bereich von 5 bis 100 com³/10 min auf.

Geeignete SAN-Typen sind beispielsweise Polymere der BASF SE wie Luran 3380, Luran 33100, Luran 2580 und Luran VLN..

Bevorzugte erfindungsgemäße Styrolpolymere sind insbesondere SAN, daneben auch AMSAN sowie Mischungen aus SAN und AMSAN.

Weiterhin geeignete Styrolpolymere auf Basis von Styrol und Acrylnitril sind Polymere (P), bevorzugt bestehend aus,
a) 18 bis 39 Gew.-% (bezogen auf P) einpolymerisiertes Acrylnitril,
b) 60 bis 81 Gew.-% (bezogen auf P) einpolymerisiertes Styrol und
c) 1 bis 22 Gew.-% (bezogen auf P) mindestens eines einpolymerisierten Monomers aus der Gruppe bestehend aus Alkyl(meth)acrylaten, (Meth)acrylsäure, Maleinsäureanhydrid und Maleinimiden.

Erfindungsgemäß bevorzugte Styrolpolymere dieses Typs sind Styrol-Acrylnitril-Maleinsäureanhydrid-Copolymere (SANMA).

Weiterhin bevorzugte Styrolpolymere (P) enthalten, (und bestehen vorzugsweise aus)
a) 55 bis 99 Gew.-% (bezogen auf P) einpolymerisiertes Styrol oder alpha-Methylstyrol oder eine einpolymerisierte Mischung aus alpha-Methylstyrol und Styrol,
b) 1 bis 45 Gew.% (bezogen auf P) mindestens eines einpolymerisierten Monomers aus der Gruppe Maleinsäureanhydrid, Maleinimide, (C₁-C₁₀)-Alkyl(meth)acrylate und (Meth)acrylsäure.

Bevorzugt sind dabei Styrolpolymere (P) enthaltend, vorzugsweise bestehend aus
a) 55 bis 100 Gew.-% (bezogen auf P) einpolymerisiertes Styrol,
b) 5 bis 40 Gew.-% (bezogen auf P) mindestens eines einpolymerisierten Monomers aus der Gruppe Maleinsäureanhydrid, Maleinimide, (C₁-C₁₀)-Alkyl(meth)acrylate und (Meth)acrylsäure.

Bevorzugt sind hierbei Styrol-Maleinsäureanhyrdrid-Copolymere (SMA), Styrol-N-Phenylmaleinimid-Copolymere (SPMI) und Styrol-Methylmethacrylat-Copolymere (SMMA), insbesondere SMMA.

Bevorzugt ist weiterhin die Verwendung von Mischungen aus a) SAN und b) SMA, SPMI und/oder SMMA, insbesondere SMA oder SPMI.

Bevorzugt sind als Styrolpolymere weiterhin Styrol, alpha-Methylstyrol, AcrylnitrilButadien-Styrolpolymerisate (ABS), Styrol-Butadien-Copolymere (SB), Acrylnitril-Styrol-Acrylester (ASA), Methylmethacrylat-Butadien-Styrol (MBS), Methylmethacrylat-Acrylnitril-Butadien-Styrol (MABS)-Polymerisate, glasklares Polystyrol (GPPS), Schlagzähpolystyrol (HIPS), anionisch polymerisiertes Polystyrol oder Schlagzähpolystyrol (A-IPS), oder Mischungen davon oder mit Polyphenylenether (PPE).

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren wie Polyamiden (PA), Polyolefinen wie Polypropylen (PP) oder Polyethylen (PE), Polyacrylaten wie Polymethylmethacrylat (PMMA), Polycarbonaten (PC), Polyestern wie Polyethylenterephthalat (PET) oder Polybutylenterephthalat (PBT), Polyethersulfonen (PES), Polyetherketonen oder Polyethersulfiden (PES) oder Mischungen davon in Anteilen von insgesamt bis maximal 30 Gew.-%, bevorzugt im Bereich von 1 bis 10 Gew.-%, bezogen auf die Polymerschmelze, abgemischt werden. Des Weiteren sind Mischungen in den genannten Mengenbereichen auch mit zum Beispiel hydrophob modifizierten oder funktionalisierten Polymeren oder Oligomeren, Kautschuken wie Polyacrylaten oder Polydienen, zum Beispiel Styrol-Butadien-Blockcopolymeren oder biologisch abbaubaren aliphatischen oder aliphatisch/aromatischen Copolyestern möglich.

Als Verträglichkeitsvermittler eignen sich zum Beispiel Maleinsäureanhydridmodifizierte Styrolcopolymere, epoxidgruppenhaltige Polymere oder Organosilane.

Der Styrolpolymerschmelze können auch Polymerrecyklate der genannten thermoplastischen Polymere, insbesondere Styrolpolymere und expandierbare Styrolpolymere in Mengen zugemischt werden, die deren Eigenschaften nicht wesentlich verschlechtern, in der Regel in Mengen von maximal 50 Gew.-%, insbesondere in Mengen von 1 bis 20 Gew.-%, bezogen auf die Gesamtmenge an Polymeren.

Die expandierbaren Polymerpartikel enthalten ein oder mehrere Treibmittel in homogener Verteilung in einem Anteil von insgesamt 2 bis 10 Gew.-%, bevorzugt 2 bis 7 Gew.-%, besonders bevorzugt 2,5-5,5 Gew.-% bezogen auf die treibmittelhaltige Styrolpolymerschmelze. Als Treibmittel bevorzugt sind die üblicherweise in EPS eingesetzten physikalischen Treibmittel wie aliphatische Kohlenwasserstoffe mit 2 bis 7 Kohlenstoffatomen, oder halogenierte Kohlenwasserstoffe. Bevorzugte Cotreibmittel sind Ketone, Ether und/oder Alkohole. Bevorzugt wird iso-Butan, n-Butan, iso-Pentan, n-Pentan eingesetzt. Ein bevorzugtes Cotreibmittel ist Aceton. Ebenfalls können N₂ (Stickstoff), CO₂ oder dessen Mischungen mit Alkoholen, und/oder C₂-C₄-Carbonylverbindungen, insbesondere Ketone, eingesetzt werden. Alternativ können CO₂ und N₂ auch aus chemischen Treibmitteln freigesetzt werden.

Die zugesetzte Treibmittelmenge wird so gewählt, dass die expandierbaren Polymerpartikel auf eine Schüttdichte nach dem Verschäumen von 10 bis 250, bevorzugt 15 bis 100, besonders bevorzugt 40 bis 90 g/l expandiert werden können.

Die erfindungsgemäßen expandierbaren Polymerpartikel weisen in der Regel eine Schüttdichte von höchstens 700 g/l, bevorzugt im Bereich von 590 bis 660 g/l auf. Bei Verwendung von Füllstoffen können in Abhängigkeit von der Art und Menge des Füllstoffs Schüttdichten im Bereich von 600 bis 800 g/l auftreten.

Des Weiteren können den expandierbaren Styrolpolymeren beispielsweise Additive, Keimbildner, UV-Stabilisatoren, Füllstoffe, Weichmacher, chemische Treibmittel, lösliche und unlösliche anorganische und/oder organische Farbstoffe und Pigmente, zum Beispiel IR-Absorber wie Ruß, Graphit, Kokse, Graphene oder Aluminiumpulver gemeinsam oder räumlich getrennt, zum Beispiel über Mischer oder Seitenextruder zugegeben werden. In der Regel werden die Farbstoffe und Pigmente in Mengen im Bereich von 0,01 bis 30, bevorzugt im Bereich von 1 bis 8 Gew.-%, bezogen auf die Gesamtmenge an Polymeren, zugesetzt. Zur homogenen und mikrodispersen Verteilung der Pigmente in dem Styrolpolymer kann es insbesondere bei polaren Pigmenten zweckmäßig sein, ein Dispergierhilfsmittel, zum Beispiel Organosilane, Epoxygruppenhaltige Polymere oder Maleinsäureanhydrid-gepfropfte Styrolpolymere einzusetzen. Bevorzugte inkooporierte Weichmacher sind Mineralöle, die in Mengen von 0,05 bis 10 Gew.-%, bezogen auf das Styrolpolymer, eingesetzt werden können.

Als vorteilhaft hat sich der Einsatz von UV-Stabilisatoren erwiesen. Speziell bei Polymeren PS1 (siehe unten) wie SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität, z.B. mit SMA, eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem.

Die Polymerpartikel können nach bekannten, dem Fachmann geläufigen Verfahren wie
V1 Einmischen des Treibmittels in eine Polymerschmelze mittels eines Extruders oder einer anderen Mischvorrichtung (die treibmittelhaltige Schmelze wird unter Druck ausgetragen und z.B. mittels Unterwasserdruckgranulierung zu Partikeln granuliert)
V2 Suspensionspolymerisation in Gegenwart von Treibmitteln, wodurch unmittelbar treibmittelhaltige Polymerpartikel entstehen oder
V3 Imprägnieren von treibmittelfreien Polymerpartikeln mit dem Treibmittel unter Druck in einer erhitzten Suspension, wobei das Treibmittel in die erweichten Partikel diffundiert (beim Abkühlen der Suspension unter Druck erhält man treibmittelhaltige Partikel)
hergestellt werden.

Die nach einem der Verfahren V1, V2 oder V3 erhältlichen EPS-Partikel können nach üblichen Verfahren abgetrennt, gewaschen und getrocknet werden.

Zur Herstellung von erfindungsgemäßen expandierbaren Styrolpolymerisaten nach dem Granulierverfahren (V1) wird das Treibmittel in die Polymerschmelze eingemischt. Ein mögliches Verfahren umfasst die Stufen a) Schmelzerzeugung, b) Mischen, c) Kühlen, d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise in Extrudern. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind zum Beispiel:
- Polymerisationsreaktor - statischer Mischer/Kühler - Zahnradpumpe - Granulator
- Polymerisationsreaktor - Schmelzeextruder - Zahnradpumpe - Granulator
- Extruder - statischer Mischer - Granulator
- Extruder - Zahnradpumpe - Granulator
- Extruder - Zahnradpumpe - statischer Mischer - Granulator
- Extruder - statischer Mischer - Zahnradpumpe - Granulator
- Extruder - Granulator.
- Extruder - statischer Mischer - Zahnradpumpe - Granulator
- Extruder - Zahnradpumpe - statischer Mischer / Wärmetauscher - Zahnradpumpe - Granulator
- Extruder - statischer Mischer - Zahnradpumpe - statischer Mischer / Wärmetauscher - Zahnradpumpe - Granulator.

Weiterhin kann die Anordnung Seitenextruder zur Einbringung von Additiven, z.B. von Feststoffen oder thermisch empfindlichen Zusatzstoffen, wie Flammschutzmitteln, aufweisen.

Die treibmittelhaltige Polymerschmelze wird in der Regel mit einer Temperatur im Bereich von 140 bis 300 °C, bevorzugt im Bereich von 160 bis 240 °C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polymerschmelze beheizt. Bevorzugt liegt die Temperatur der Düsenplatte im Bereich von 20 bis 100 °C über der Temperatur der treibmittelhaltigen Polymerschmelze. Dadurch werden Polymerablagerungen in den Düsen verhindert und eine störungsfreie Granulierung gewährleistet.

Um marktfähige Granulatgrößen zu erhalten, sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich von 0,4 bis 1,4 mm gezielt einstellen.

Besonders bevorzugt ist ein Verfahren zur Herstellung von expandierbaren Styrolpolymeren, umfassend die Schritte:
a) Einmischen eines physikalischen Treibmittels sowie gegebenenfalls weiterer Hilfs- und Zusatzstoffe in die Polymerschmelze mittels statischer oder dynamischer Mischer bei einer Temperatur von mindestens 150 °C,
b) Kühlen der treibmittelhaltigen Polymerschmelze auf eine Schmelzetemperatur von mindestens 160 °C,
c) Austrag durch eine Düsenplatte mit Bohrungen, deren Durchmesser am Düsenaustritt höchstens 1,5 mm beträgt, und
d) Granulieren der treibmittelhaltigen Schmelze direkt hinter der Düsenplatte unter Wasser bei einem Druck im Bereich von 1 bis 20 bar, bevorzugt bei 6 bis 14 bar.

Bevorzugt ist es auch, expandierbare Styrolpolymere durch Suspensionspolymerisation in wässriger Suspension in Gegenwart eines physikalischen Treibmittels herzustellen.

Bei der Suspensionspolymerisation wird als Monomer bevorzugt Styrol allein eingesetzt. Es kann jedoch zu bis zu 20% seines Gewichts durch andere ethylenisch ungesättigte Monomere wie Alkylstyrole, Divinylbenzol, Acrylnitril, 1,1-Diphenylether oder alpha-Methylstyrol ersetzt sein.

Bei der Suspensionspolymerisation können die üblichen Hilfsmittel, z.B. Peroxidinitiatoren, Suspensionsstabilisatoren, Treibmittel, Kettenüberträger, Expandierhilfsmittel, Keimbildner oder Weichmacher, zugesetzt werden. Das erfindungsgemäße Flammschutzsystem wird bei der Polymerisation in Mengen von 0,2 bis 15 Gew.-Teilen, vorzugsweise von 1 bis 10 Gew.-Teilen zugesetzt. Treibmittel werden in Mengen von 2 bis 10 Gew.-Teilen, bezogen auf Monomer, zugesetzt. Man kann sie vor, während oder nach der Polymerisation der Suspension zusetzen. Geeignete Treibmittel sind z.B. aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat, einzusetzen.

Bei der Suspensionspolymerisation entstehen perlförmige, im Wesentlichen runde Teilchen mit einem mittleren Durchmesser im Bereich von 0,2 bis 2 mm.

In einer weiteren bevorzugten Ausführungsform der Erfindung sind die expandierbaren Polymerteilchen ein Polymergranulat, erhältlich durch ein Verfahren umfassend die Schritte
a) Bereitstellen einer Polymerkomponente (P), bestehend aus
   PS) 90 bis 100 Gew.-% (bezogen auf P) einer Styrolpolymerkomponente mit einer Glasübergangstemperatur ≥ 130 °C, die gebildet ist aus
   PS1) 30 bis 100 Gew.-% (bezogen auf P) an einem oder mehreren Styropolpolymeren, enthaltend
   PS11) 60 bis 85 Gew.-% (bezogen auf PS1) einpolymerisiertes Styrol (PS11) oder alpha-Methylstyrol (PS12) oder eine einpolymerisierte Mischung aus Styrol und alpha-Methylstyrol (PS13),
   PS12) 15 bis 40 Gew.-% (bezogen auf PS1) mindestens eines einpolymerisierten Monomers aus der Gruppe Maleinsäureanhydrid und Maleinimide und
   PS2) 0 bis 30 Gew.-% (bezogen auf P) an einem oder mehreren von PS1 unterschiedlichen Stryolpolymeren, enthaltend
   PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
   PS22) 18 bis 40 Gew.-% (bezogen auf PS2) einpolymerisiertes Acrylnitril
      und
   PT) 0 bis 10 Gew.-% (bezogen auf P) an einem oder mehreren thermoplastischen Polymeren aus der Gruppe bestehend aus aromatischen Polyethern; Polyolefinen; Polyacrylaten; Polycarbonaten (PC); Polyestern; Polyamiden; Polyethersulfonen (PES); Polyetherketonen (PEK) und Polyethersulfiden (PES),
(b) Erhitzen der Polymerkomponente (P) zur Ausbildung einer Polymerschmelze,
(c) Einbringen von 1 bis 5 Gew.-% (bezogen auf P) einer physikalischen Treibmittelkomponente (T), in die Polymerschmelze zur Ausbildung einer schäumbaren Schmelze,
(d) Homogenisieren der Mischung,
(e) gegebenenfalls Zugabe von Additiven zu der Polymerkomponente P in mindestens einem der Schritte a), b), c) und/oder d),
(f) Extrusion der treibmittelhaltigen Polymerschmelze durch eine Düsenplatte,
(g) Granulieren der treibmitteilhaltigen Schmelze in einer flüssigkeitsgefüllten Kammer unter einem Druck von 1,5 bis 15 bar zu einem Granulat.

In einer weiteren bevorzugten Ausführungsform sind die expandierbaren Polymerteilchen ein expandierbares Granulat (G) mit einem Stickstoffanteil von ≤ 8 Gew.-% [bezogen auf (G)], dessen Partikel jeweils mindestens 10 Hohlräume pro mm³ im Größenbereich von 1 bis 200 µm enthalten und das eine Polymerkomponente (P) mit einer Glasübergangstemperatur im Bereich von größer 105 °C enthält, bestehend aus
PS) 75 bis 100 Gew.-% (bezogen auf P) einer Styrolpolymerkomponente, die gebildet ist aus
PS1) 10 bis 100 Gew.-% (bezogen auf P) an einem oder mehreren Styrolpolymeren, enthaltend jeweils
PS11) 60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12) 0 bis 40 Gew.-% (bezogen auf PS1) mindestens eines einpolymerisierten Monomers aus der Gruppe Maleinsäureanhydrid, Maleinimide, (C₁-C₁₀) Alkyl(meth)acrylate und (Meth)acrylsäure,
PS2) 0 bis 90 Gew.-% (bezogen auf P) an einem oder mehreren von PS1 unterschiedlichen Styrolcopolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.-% (bezogen auf PS2) einpolymerisiertes Acrylnitril
   und
PT) 0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES);
mit der Maßgabe, dass neben der Komponente PS11) mindestens eine der Komponenten PS12, PS2 und PT in einem Anteil von mindestens 5 Gew.-% (bezogen jeweils auf PS1, PS beziehungsweise P) vorhanden sein muss.

Ebenso Gegenstand der Erfindung ist ein Formteil, erhältlich aus dem erfindungsgemäß beschichteten Granulat sowie dessen Verwendung als Isolationsmaterial für technische Anwendungen und den Baubereich sowie insbesondere in Verbundformteilen für den Möbelbau.

Die erfindungsgemäß beschichteten expandierbaren Granulatpartikel können bevorzugt zu erfindungsgemäßen Schaumstoffen mit Dichten im Bereich von 10 bis 150 kg/m³, bevorzugt 15 bis 100 kg/m³, besonders bevorzugt 40 bis 90 g/l verarbeitet werden. Hierzu werden die expandierbaren Partikel vorgeschäumt. Dies geschieht zumeist durch Erwärmen mit Wasserdampf in sogenannten Vorschäumern. Die so vorgeschäumten Partikel werden danach zu Formköpern verschweißt. Hierzu werden die vorgeschäumten Partikel in nicht gasdicht schließende Formen gebracht und mit Wasserdampf beaufschlagt. Nach dem Abkühlen können die erfindungsgemäßen Formteile entnommen werden.

Die erfindungsgemäßen Schäume und Formteile finden vorzugsweise Verwendung als Isolationsmaterial für technische Anwendungen und den Baubereich oder als Schaumelement für Leichtbau- und Verbundanwendungen, beispielsweise in Automobilanwendungen und Windkraftanlagen, z.B. in Rotorblättern solcher Windkraftanlagen, sowie insbesondere in Verbundformteilen für den Möbelbau.

Zu diesem Zweck wird auf die erhaltenen Schaumformteile, welche in Form einer Schaumplatte vorliegen, nach bekannten, dem Fachmann geläufigen Methoden mindestens eine Deckschicht aufgebracht. Auf diese Weise erhaltene Verbundformteile sind ebenfalls Gegenstand der Erfindung.

Neben einer ersten Schicht aus der beschriebenen Schaumplatte enthalten die erfindungsgemäßen Verbundformteile mindestens eine weitere Schicht. Bevorzugt ist die erste Schicht wenigstens auf zwei Flächen mit einer oder mehreren weiteren Schichten verbunden. Weiterhin bevorzugt ist die erste Schicht auf mindestens zwei Flächen (im Fall eines rechtwinkligen Querschnitts oben und unten), ebenso bevorzugt sind alle Flächen mit einer oder mehreren weiteren Schichten verbunden.

Die Erfindung wird durch die Beispiele näher erläutert, ohne sie dadurch beschränken zu wollen.

### Beispiele:

### Einsatzstoffe:

| | |
|---|---|
| Luran 3380: | SAN mit einem Acrylnitrilgehalt von 33 Gew.-% und einem MVR (220 °C, 10 kg) von 20 ml/10 min (Handelsprodukt der BASF SE) |
| Luran HH 120: | AMSAN mit einem Acrylnitrilgehalt von 29,5 Gew.-% und einem MVR (220 °C, 10 kg) von 7 ml/10 min (Handelsprodukt der BASF SE) |
| Xiran SZ26080: | SMA mit einem Maleinsäureanhydridgehalt von 26 Gew.-% und einem MFR (240 °C, 10 kg) von 58 g/10 min der Firma Polyscope |
| Denka IP MS-NI: | SPMI mit einem MFR (265 °C, 10 kg) von 11 g/10 min der Firma Denka |
| Acrystex PM-600 | SMMA mit einem MVR (220 °C, 10 kg) von 21,3 ml/10 min der Firma Chi Mei |
| Pentan S: | Mischung aus 80 Gew.-% n-Pentan und 20 Gew.-% iso-Pentan der Firma Haltermann |
| GMS: | Glycerinmonostearat; Dimodan HR 75/B der Firma Danisco |
| GTS: | Glycerintristearat; Tegin BL 150 V der Firma Evonik Goldschmidt |
| Kieselsäure: | Fällungskieselsäure; Tixosil 38 der Firma Rhodia |
| Zeolith: | Zeolith A der Firma Sigma Aldrich |
| Hexamoll Dinch: | 1,2-Cyclohexandicarbonsäurediisononylester der Firma BASF SE |
| Mesamoll II: | Alkylsulfonsäureester des Phenols der Firma Lanxess |

### 1) Herstellung expandierbarer Granulate

In einem Zweischneckenextruder der Firma Leistritz ZSK 18 wurden 100 Gew.-% Matrixpolymer sowie die entsprechende Additivmischung bei 230 bis 280 °C aufgeschmolzen. Anschließend wurde die Polymerschmelze mit 5 Gew.-% Pentan S, bezogen auf die Polymermatrix, beladen. Danach wurde die Polymerschmelze in zwei statischen Mischern homogenisiert und auf 230 °C abgekühlt. Nach Homogenisierung über zwei weitere statische Mischer wurde die Schmelze auf 200 °C bis 220 °C gekühlt und durch eine beheizte Lochplatte extrudiert (4 Löcher mit 0,65 mm Bohrung und 280 °C Lochplattentemperatur). Der Polymerstrang wurde mittels Unterwassergranulierung abgeschlagen (12 bar Unterwasserdruck, 60 °C Wassertemperatur), so dass ein treibmittelbeladenes Minigranulat mit enger Teilchengrößenverteilung (d' = 1,1 mm) erhalten wurde.

**Tabelle 1: Hergestellte Expandierbare Granulate**

| Mischung | Komponente 1 [phr] | Komponente 2 [phr] |
|---|---|---|
| P1 | Luran 3380: 50 | Luran HH 120: 50 |
| P2 | Luran 3380: 75 | Xiran SZ26080: 25 |
| P3 | Luran 3380: 75 | Denka IP MS-NI: 25 |
| P4 | Acrystex PM-600: 100 | |
| P5 | Luran 3380: 100 | |
| P6 | Luran 3380: 75 | Luran HH 120: 25 |

### 2) Zusammensetzungen der Additivmischungen

| Additivmischung | Luran 3380 [Gew.-%] | Talkum [Gew.-%] | Ruß Printex FP [Gew.-%] | Bayfe rrox 110M [Gew.-%] | Kenawax Yellow [Gew.-%] | Thermoplast Gelb 104 [Gew.-%] | Irgafos 168 [Gew. -%] | Irganox 3052 [Gew.-%] | Irganox 245 [Gew.-%] |
|---|---|---|---|---|---|---|---|---|---|
| A1 | 67,76 | 6,81 | 0,41 | 8,25 | | 7,99 | 2,91 | 2,91 | 2,96 |
| A2 | 72,33 | 8,00 | 0,87 | 10,0 | | 8,80 | | | |
| A3 | 65,11 | 12,23 | 0,41 | 9,66 | 8,15 | | 3,16 | 1,28 | |
| A4 | 66,97 | 7,41 | 0,81 | 9,26 | 8,15 | | 2,96 | 1,48 | 2,96 |
| A5 | 66,97 | 7,41 | 0,81 | 9,26 | | 8,15 | 2,96 | 1,48 | 2,96 |

### 3) Herstellung von Beschichtungsmittelmischungen

Die Beschichtungskomponenten wurden zu einem einheitlichen Pulver vermischt.

**Tabelle 2: Hergestellte Beschichtungen**

| Beschichtung | Komponente 1 [Gew.-%] | Komponente 2 [Gew.-%] | Komponente 3 [Gew.-%] |
|---|---|---|---|
| B1 | GTS: 60 | GMS: 30 | Kieselsäure: 10 |
| B2 | GMS: 25 | Kieselsäure: 45 | Mesamoll II: 30 |
| B3 | GMS: 25 | Kieselsäure: 45 | Hexamoll Dinch: 30 |
| B4 | GMS: 50 | Kieselsäure: 30 | Mesamoll II: 20 |
| B5 | Kieselsäure: 70 | Hexamoll Dinch: 30 | |
| B6 | GMS: 25 | Zeolith: 45 | Hexamoll Dinch: 30 |
| B7 | GMS: 25 | Zeolith: 45 | Mesamoll II: 30 |
| B8 | GMS: 75 | Kieselsäure: 15 | Mesamoll II: 10 |
| B9 | GMS: 50 | Kieselsäure: 30 | Hexamoll Dinch: 20 |
| B10 | GMS: 75 | Kieselsäure: 15 | Hexamoll Dinch: 10 |

### 4) Beschichtung der Granulate

Die Beschichtungen wurden in einem Lödige-Mischer auf die mit 200 ppm Antistatikum 743 (Fa. BASF SE) vorbeschichteten expandierbaren Granulate aufgebracht

### 5) Schäumversuche

Die beschichteten Granulate wurden im Vorschäumer (PREEX 1000 der Firma Hirsch) bei einem Wasserdampfdruck von 1,1 bar vorgeschäumt und mit einem Formteilautomaten (EHV-C der Firma Erlenbach) zu Platten mit einer Dichte von ca. 80 bis 90 g/l bei einem Dampfdruck von 2,4 bar verschweißt (* = bei Dampfdruck von 2,5 bar verschweißt).

**Tabelle 3: Verarbeitungsdaten der beschichteten Granulate**

| Beispiel | Polymer | Beschichtung [Gew.-%] | Additiv [phr] | Vorschäumzeit [s] | Dichte [g/l] | Entformzeit [s] |
|---|---|---|---|---|---|---|
| VBsp1 | P1 | B1: 0,4 | A2: 6,25 | 149 | 79,8 | 158 |
| Bsp1 | P1 | B2: 0,4 | A2: 6,25 | 195 | 85,4 | 69 |
| Bsp2 | P1 | B3: 0,4 | A5: 6,75 | 257 | 89,0 | 70 |
| Bsp3 | P1 | B4: 0,4 | A2: 7,75 | 193 | 85,4 | 101 |
| Bsp4 | P1 | B5: 0,4 | A2: 6,25 | 185 | 83,1 | 120 |
| Bsp5 | P1 | B6: 0,4 | A4: 6,75 | 211 | 82,7 | 84 |
| Bsp6 | P1 | B7: 0,4 | A2: 6,33 | 203 | 80,4 | 82 |
| Bsp7 | P1 | Hexa moll Dinch: 0,2 | A2: 6,25 | 238 | 79,8 | 177 |
| VBsp2 | P2 | B1: 0,4 | A5: 6,75 | 177 | 78,4 | 138 |
| Bsp8 | P2 | B3: 0,4 | A5: 6,75 | 221 | 82,5 | 65 |
| VBsp3 | P3 | B1: 0,4 | A4: 6,75 | 185 | 82,1 | 144 |
| Bsp9 | P3 | B3: 0,4 | A4: 6,75 | 253 | 83,4 | 77 |
| VBsp4 | P4 | B1: 0,4 | A5: 6,75 | 132 | 80,5 | 187 |
| Bsp10 | P4 | B3: 0,4 | A5: 6,75 | 187 | 86,5 | 95 |
| VBsp5 | P5 | B1: 0,4 | A2: 6,25 | 119,2 | 81,3 | 112 |
| Bsp11 | P5 | - | A2: 6,25 | 128,1 | 79,2 | 147 |
| Bsp12 | P5 | B2: 0,4 | A2: 6,25 | 99,5 | 79,3 | 80 |
| Bsp13 | P5 | B4: 0,4 | A2: 6,25 | 101,5 | 85,4 | 101 |
| Bsp14 | P5 | B8: 0,4 | A2: 6,25 | 105,8 | 85,8 | 94 |
| Bsp15 | P5 | B3: 0,4 | A2: 6,25 | 102,2 | 78 | 91 |
| Bsp16 | P5 | B5: 0,4 | A2: 6,25 | 107,6 | 83,1 | 132 |
| Bsp17 | P5 | B9: 0,4 | A2: 6,25 | 107,2 | 78,1 | 96 |
| Bsp18 | P5 | B10: 0,4 | A2: 6,25 | 108,8 | 78,0 | 100 |
| VBsp6* | P6 | B1: 0,4 | A5: 6,75 | 128 | 80,8 | 107 |
| Bsp19* | P6 | B2: 0,4 | A5: 6,75 | 142,0 | 78,3 | 50 |
| Bsp20* | P6 | B3: 0,4 | A5: 6,75 | 144,3 | 81,4 | 106 |

### 6) Mechanik

Die Charakterisierung der Biegefestigkeit wurde nach EN 12089 bestimmt. Die Werte wurden auf eine Schaumstoffdichte von 80 g/l normiert um eine Vergleichbarkeit zu gewährleisten.

**Tabelle 4: Biegefestigkeit der Schaumkörper**

| Beispiel | Biegefestigkeit [kPa] |
|---|---|
| VBsp1 | 980 |
| Bsp1 | 1140 |
| Bsp2 | 1170 |
| Bsp3 | 1070 |
| Bsp4 | 1100 |
| Bsp5 | 1060 |
| Bsp6 | 1080 |
| Bsp7 | 1065 |
| VBsp2 | 950 |
| Bsp8 | 1130 |
| VBsp3 | 990 |
| Bsp9 | 1100 |
| VBsp4 | 930 |
| Bsp10 | 976 |
| VBsp5 | 990 |
| Bsp11 | 965 |
| Bsp12 | 1074 |
| Bsp13 | 1199 |
| Bsp14 | 1200 |
| Bsp15 | 1033,2 |
| Bsp16 | 1207 |
| Bsp17 | 1066 |
| Bsp18 | 1127 |
| VBsp6 | 930 |
| Bsp19 | 1090 |
| Bsp20 | 1101 |

## Patentansprüche

1. Expandierbare Polymerpartikel, beschichtet mit einem oder mehreren Weichmachern aus der Gruppe bestehend aus a) einem oder mehreren Alkylestern von Cyclohexancarbonsäuren mit einem Siedepunkt ≥ 160 °C, b) einem oder mehreren C₁₀-C₂₁-Alkansulfonsäurephenylestern mit einem Siedepunkt ≥ 150 °C und c) Mischungen der Komponenten a) und b).

2. Expandierbare Polymerpartikel gemäß Anspruch 1, enthaltend einen Weichmacher a), wobei der Alkylester einer Cyclohexancarbonsäure eine Verbindung der Formel (I) ist, 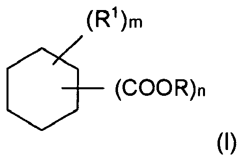 worin die Symbole und Indizes folgende Bedeutungen haben:
R¹ ist C₁-C₁₀-Alkyl oder C₃-C₈-Cycloalkyl;
m ist 0, 1, 2 oder 3;
n ist 2, 3 oder 4 und
R ist C₁-C₃₀-Alkyl.

3. Expandierbare Polymerpartikel gemäß Anspruch 1 oder 2, wobei der Weichmacher 1,2-Cyclohexandicarbonsäurediisononylester ist.

4. Expandierbare Polymerpartikel gemäß Anspruch 1, enthaltend einen Weichmacher, wobei der Weichmacher eine Mischung von Alkansulfonsäurephenylestern der Formel (II) enthält,

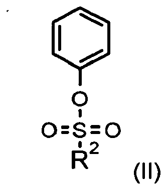

5. Expandierbare Polymerpartikel gemäß Anspruch 1 oder 4, wobei der Weichmacher eine Mischung ist, die zu 75 bis 85 % aus einem Gemisch sekundärer Alkansulfonsäurephenylester besteht und zusätzlich 15 bis 25 % sekundäre Alkandisulfonsäurediphenylester sowie 2 bis 3 % nicht sulfonierte Alkane enthält, wobei die Alkylreste überwiegend unverzweigt sind und die Kettenlängen im Bereich von 10 bis 21 Kohlenstoffatomen liegen.

6. Expandierbare Polymerpartikel gemäß einem der Ansprüche 1 bis 5, wobei der Weichmacher an einen porenhaltigen Feststoff adsorbiert ist.

7. Expandierbare Polymerpartikel gemäß einem der Ansprüche 1 bis 6, wobei als weitere Beschichtungskomponente mindestens ein Glycerinester vorhanden ist.

8. Expandierbare Polymerpartikel gemäß einem der Ansprüche 1 bis 7, enthaltend mindestens 50 Gew.-% einpolymerisiertes Styrol und/oder alpha-Methylstyrol.

9. Expandierbare Polymerpartikel gemäß Anspruch 8, wobei das Polymer mindestens ein weiteres einpolymerisiertes Monomer aus der Gruppe, Acrylnitril, Maleinsäureanhydrid, Maleinimide, (Meth)acrylate und (Meth)acrylsäure enthält.

10. Expandierbare Polymerpartikel gemäß Anspruch 8 oder 9, wobei das Styrolpolymer ein Styrol-Acrylnitril-Copolymer (SAN) ist.

11. Expandierbare Polymerpartikel gemäß Anspruch 8 oder 9, enthaltend mindestens ein SAN- und mindestens ein alpha-Methylstyrol-Acrylnitril-Copolymer (AMSAN).

12. Expandierbare Polymerpartikel gemäß Anspruch 8 oder 9, enthaltend mindestens SAN-Copolymer in Mischung mit a) einem Styrol-Maleinsäureanhydrid-Copolymer (SMA) und/oder b) einem Styrol-N-Phenylmaleinimid-Copolymer.

13. Expandierbare Polymerpartikel gemäß Anspruch 8 oder 9, wobei die Polymerpartikel eine Mischung aus SAN, AMSAN und SMA enthalten.

14. Expandierbare Polymerpartikel gemäß Anspruch 8 oder 9, enthaltend mindestens ein Styrol-Methylmethacrylat-Copolymer (SMMA).

15. Expandierbare Polymerpartikel gemäß Anspruch 8 oder 9, wobei die Polymerpartikel erhältlich sind durch ein Verfahren, umfassend die Schritte
a) Bereitstellen einer Polymerkomponente (P), gebildet aus
PS) 90 bis 100 Gew.-% (bezogen auf P) einer Styrolpolymerkomponente mit einer Glasübergangstemperatur ≥ 130 °C, die gebildet ist aus
PS1) 30 bis 100 Gew.-% (bezogen auf P) an einem oder mehreren Styropolpolymeren, enthaltend
PS11) 60 bis 85 Gew.-% (bezogen auf PS1) einpolymerisiertes Styrol (PS11) oder alpha-Methylstyrol (PS12) oder eine einpolymerisierte Mischung aus alpha-Methylstyrol und Styrol (PS13),
PS12) 15 bis 40 Gew.-% (bezogen auf PS1) mindestens eines einpolymerisierten Monomers aus der Gruppe Maleinsäureanhydrid und Maleinimide und
PS2) 0 bis 70 Gew.-% (bezogen auf P) an einem oder mehreren von PS1 unterschiedlichen Styrolpolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.-% (bezogen auf PS2) einpolymerisiertes Acrylnitril
und
PT) 0 bis 10 Gew.-% (bezogen auf P) an einem oder mehreren thermoplastischen Polymeren aus der Gruppe bestehend aus aromatischen Polyethern; Polyolefinen; Polyacrylaten; Polycarbonaten (PC); Polyestern; Polyamiden; Polyethersulfonen (PES); Polyetherketonen (PEK) und Polyethersulfiden (PES),
(b) Erhitzen der Polymerkomponente (P) zur Ausbildung einer Polymerschmelze,
(c) Einbringen von 1 bis 5 Gew.-% (bezogen auf P) einer physikalischen Treibmittelkomponente (T), in die Polymerschmelze zur Ausbildung einer schäumbaren Schmelze,
(d) Homogenisieren der Mischung,
(e) gegebenenfalls Zugabe von Additiven zu der Polymerkomponente P in mindestens einem der Schritte a), b), c) und/oder d),
(f) Extrusion der treibmittelhaltigen Polymerschmelze durch eine Düsenplatte,
(g) Granulieren der treibmitteilhaltigen Schmelze in einer flüssigkeitsgefüllten Kammer unter einem Druck von 1,5 bis 15 bar zu einem Granulat.

16. Expandierbare Polymerpartikel gemäß einem der Anspruch 8 oder 9, wobei die Polymerpartikel ein expandierbares Granulat (G) mit einem Stickstoffanteil von ≤ 8 Gew.-% (bezogen auf (G)) sind, dessen Partikel jeweils mindestens 10 Hohlräume pro mm³ im Größenbereich von 1 bis 200 µm enthalten und das eine Polymerkomponente (P) mit einer Glasübergangstemperatur im Bereich von ≥ 105 °C bis 200 °C enthält, gebildet aus
PS) 75 bis 100 Gew.-% (bezogen auf P) einer Styrolpolymerkomponente, die gebildet ist aus
PS1) 10 bis 100 Gew.-% (bezogen auf P) an einem oder mehreren Styrolpolymeren, enthaltend jeweils
PS11) 60 bis 100 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12) 0 bis 90 Gew.-% (bezogen auf PS1) mindestens eines einpolymerisierten Monomers aus der Gruppe Maleinsäureanhydrid, Maleinimide, (C₁-C₁₀)-Alkyl(meth)acrylate und (Meth)acrylsäure,
PS2) 0 bis 90 Gew.-% (bezogen auf P) an einem oder mehreren von PS1 unterschiedlichen Styrolcopolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.-% (bezogen auf PS2) einpolymerisiertes Acrylnitril
und
PT) 0 bis 25 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES);
mit der Maßgabe, dass neben der Komponente PS11) mindestens eine der Komponenten PS12, PS2 und PT in einem Anteil von mindestens 5 Gew.-% (bezogen jeweils auf PS1, PS beziehungsweise P) vorhanden sein muss.

17. Expandierbare Polymerpartikel gemäß einem der Ansprüche 1 bis 16 mit einem Treibmittelgehalt zwischen 1 und 10 Gew.-%.

18. Verfahren zur Herstellung expandierbarer Polymerpartikel gemäß einem der Ansprüche 1 bis 17, wobei die Beschichtung durch Besprühen oder Auftrommeln aufgebracht wird.

## Claims

1. Expandable polymeric beads coated with one or more plasticizers selected from the group consisting of a) one or more alkyl esters of cyclohexanecarboxylic acids having a boiling point ≥ 160°C, b) one or more phenyl C₁₀-C₂₁-alkanesulfonates having a boiling point ≥ 150°C and c) mixtures of components a) and b).

2. The expandable polymeric beads according to claim 1, comprising a plasticizer a), wherein the alkyl ester of a cyclohexanecarboxylic acid is a compound of formula (I), 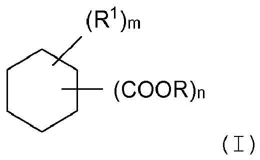 where the symbols and indices have the following meanings:
R¹ is C₁-C₁₀-alkyl or C₃-C₈-cycloalkyl;
m is 0, 1, 2 or 3;
n is 2, 3 or 4; and
R is C₁-C₃₀-alkyl.

3. The expandable polymeric beads according to claim 1 or 2, wherein the plasticizer is diisononyl 1,2-cyclohexanedicarboxylate.

4. The expandable polymeric beads according to claim 1, comprising a plasticizer, wherein the plasticizer comprises a mixture of phenyl alkanesulfonates of formula (II),

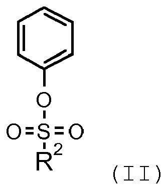

5. The expandable polymeric beads according to claim 1 or 4, wherein the plasticizer is a mixture consisting of a mixture of phenyl secondary alkane-sulfonates to an extent from 75 to 85% and further comprising from 15 to 25% of diphenyl secondary alkanesulfonates and also from 2 to 3% of unsulfonated alkanes, wherein the alkyl moieties are predominantly unbranched and the chain lengths range from 10 to 21 carbon atoms.

6. The expandable polymeric beads according to any one of claims 1 to 5, wherein the plasticizer is adsorbed on a porous solid.

7. The expandable polymeric beads according to any one of claims 1 to 6, wherein at least one glycerol ester is present as further coating component.

8. The expandable polymeric beads according to any one of claims 1 to 7, comprising at least 50% by weight of polymerized styrene and/or alpha-methylstyrene.

9. The expandable polymeric beads according to claim 8, wherein the polymer comprises at least one further polymerized monomer selected from the group consisting of acrylonitrile, maleic anhydride, maleimides, (meth)acrylates and (meth)acrylic acid.

10. The expandable polymeric beads according to claim 8 or 9, wherein the styrene polymer is a styrene-acrylonitrile copolymer (SAN).

11. The expandable polymeric beads according to claim 8 or 9, comprising at least one SAN copolymer and at least one alpha-methylstyrene-acrylonitrile copolymer (AMSAN).

12. The expandable polymeric beads according to claim 8 or 9, comprising at least SAN copolymer in admixture with a) a styrene-maleic anhydride copolymer (SMA) and/or b) a styrene-N-phenylmaleimide copolymer.

13. The expandable polymeric beads according to claim 8 or 9, wherein the polymeric beads comprise a mixture of SAN, AMSAN and SMA.

14. The expandable polymeric beads according to claim 8 or 9, comprising at least one styrene-methyl methacrylate copolymer (SMMA).

15. The expandable polymeric beads according to claim 8 or 9, wherein the polymeric beads are obtainable by a process comprising the steps of
a) providing a polymer component (P) formed from
PS) 90% to 100% by weight (based on P) of a styrene polymer component having a glass transition temperature ≥ 130°C and formed from
PS1) 30% to 100% by weight (based on P) of one or more Styropol polymers comprising
PS11) 60% to 85% by weight (based on PS1) of polymerized styrene (PS11) or alpha-methylstyrene (PS12) or of a polymerized mixture of alpha-methylstyrene and styrene (PS13),
PS12) 15% to 40% by weight (based on PS1) of at least one polymerized monomer selected from the group consisting of maleic anhydride and maleimides, and
PS2) 0% to 70% by weight (based on P) of one or more styrene polymers other than PS1, comprising
PS21) 60% to 82% by weight (based on PS2) of polymerized styrene (PS11) or alpha-methylstyrene (PS12) or of a polymerized mixture of styrene and alpha-methylstyrene (PS13), and
PS22) 18% to 40% by weight (based on PS2) of polymerized acrylonitrile
and
PT) 0% to 10% by weight (based on P) of one or more thermoplastic polymers selected from the group consisting of aromatic polyethers; polyolefins; polyacrylates; polycarbonates (PC); polyesters; polyamides; polyether sulfones (PES); polyether ketones (PEK) and polyether sulfides (PES),
(b) heating the polymer component (P) to form a polymer melt,
(c) introducing from 1% to 5% by weight (based on P) of a physical blowing agent component (T) into the polymer melt to form a foamable melt,
(d) homogenizing the mixture,
(e) optionally adding additives to the P polymer component in one or more of steps a), b), c) and/or d),
(f) extruding the blowing agent-containing polymer melt through a die plate,
(g) pelletizing the blowing agent-containing melt in a liquid-filled chamber under a pressure of 1.5 to 15 bar to form a pelletized material.

16. The expandable polymeric beads according to either of claims 8 and 9, wherein the polymeric beads are an expandable pelletized material (G) having a nitrogen content of ≤ 8% by weight based on (G) where each pellet contains per mm³ 10 or more cavities ranging in size from 1 to 200 µm and which comprises a polymer component (P) having a glass transition temperature of ≥ 105°C to 200°C, formed from
PS) 75% to 100% by weight (based on P) of a styrene polymer component formed from
PS1) 10% to 100% by weight (based on P) of one or more styrene polymers comprising in each case
PS11) 60% to 100% by weight (based on PS1) of polymerized styrene (PS111) or alpha-methylstyrene (PS112) or of a polymerized mixture of alpha-methylstyrene and styrene (PS113),
PS12) 0% to 90% by weight (based on PS1) of one or more than one polymerized monomer selected from the group consisting of maleic anhydride, maleimides, (C₁-C₁₀)-alkyl (meth) acrylates and (meth) acrylic acid,
PS2) 0% to 90% by weight (based on P) of one or more styrene copolymers other than PS1, comprising
PS21) 60% to 82% by weight (based on PS2) of polymerized styrene (PS11) or alpha-methylstyrene (PS12) or of a polymerized mixture of styrene and alpha-methylstyrene (PS13), and
PS22) 18% to 40% by weight (based on PS2) of polymerized acrylonitrile
and
PT) 0% to 25% by weight (based on P) of one or more thermoplastic polymers selected from the group consisting of aromatic polyethers; polyolefins; polyacrylates; polycarbonates (PC); polyesters; polyamides; polyether sulfones (PES); polyether ketones (PEK) and polyether sulfides (PES);
with the proviso that in addition to the PS11) component one or more of the PS12, PS2 and PT components shall be present in a proportion of at least 5% by weight (based respectively on PS1, PS and P).

17. The expandable polymeric beads according to any one of claims 1 to 16 having a blowing agent content between 1% and 10% by weight.

18. A process for producing expandable polymeric beads according to any one of claims 1 to 17, wherein the coating is applied by spraying or drumming.

## Revendications

1. Particules polymères expansibles, revêtues par un ou plusieurs plastifiants du groupe constitué par a) un ou plusieurs esters alkyliques d'acides cyclohexanecarboxyliques présentant un point d'ébullition ≥ 160°C, b) un ou plusieurs esters phényliques d'acides C₁₀-C₂₁-alcanesulfoniques présentant un point d'ébullition ≥ 150°C, et c) des mélanges des composants a) et b).

2. Particules polymères expansibles selon la revendication 1, contenant un plastifiant a), le radical ester alkylique d'un acide cyclohexanecarboxylique étant un composé de formule (I), 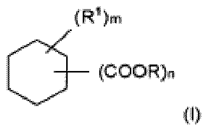 où les symboles et les indices présentent les significations suivantes :
R¹ représente C₁-C₁₀-alkyle ou C₃-C₈-cycloalkyle ;
m vaut 0, 1, 2 ou 3 ;
n vaut 2, 3 ou 4 et
R représente C₁-C₃₀-alkyle.

3. Particules polymères expansibles selon la revendication 1 ou 2, le plastifiant étant l'ester diisononylique de l'acide 1,2-cyclohexanedicarboxylique.

4. Particules polymères expansibles selon la revendication 1, contenant un plastifiant, le plastifiant contenant un mélange d'esters phényliques d'acides alcanesulfoniques de formule (II),

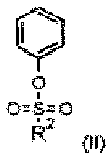

5. Particules polymères expansibles selon la revendication 1 ou 4, le plastifiant étant un mélange, qui est constitué à raison de 75 à 85% d'un mélange d'esters phényliques d'acides alcanesulfoniques secondaires et qui contient en plus 15 à 25% d'esters diphényliques d'acides alcanedisulfoniques secondaires ainsi que 2 à 3% d'alcanes non sulfonés, les radicaux alkyle étant principalement non ramifiés et les longueurs de chaîne se situant dans la plage de 10 à 21 atomes de carbone.

6. Particules polymères expansibles selon l'une quelconque des revendications 1 à 5, le plastifiant étant adsorbé sur un solide contenant des pores.

7. Particules polymères expansibles selon l'une quelconque des revendications 1 à 6, au moins un ester de glycérol étant présent comme autre composant de revêtement.

8. Particules polymères expansibles selon l'une quelconque des revendications 1 à 7, contenant au moins 50% en poids d'un styrène et/ou d'un alpha-méthylstyrène polymérisé.

9. Particules polymères expansibles selon la revendication 8, le polymère contenant au moins un autre monomère copolymérisé du groupe formé par l'acrylonitrile, l'anhydride de l'acide maléique, les maléinimides, les (méth)acrylates et l'acide (méth)acrylique.

10. Particules polymères expansibles selon la revendication 8 ou 9, le polymère de styrène étant un copolymère de styrène-acrylonitrile (SAN).

11. Particules polymères expansibles selon la revendication 8 ou 9, contenant au moins un copolymère de SAN et au moins un copolymère d'alpha-méthylstyrène-acrylonitrile (AMSAN).

12. Particules polymères expansibles selon la revendication 8 ou 9, contenant au moins un copolymère de SAN en mélange avec a) un copolymère de styrène-anhydride de l'acide maléique (SMA) et/ou b) un copolymère de styrène-N-phénylmaléinimide.

13. Particules polymères expansibles selon la revendication 8 ou 9, les particules polymères contenant un mélange de SAN, d'AMSAN et de SMA.

14. Particules polymères expansibles selon la revendication 8 ou 9, contenant au moins un copolymère de styrène-méthacrylate de méthyle (SMMA).

15. Particules polymères expansibles selon la revendication 8 ou 9, les particules polymères pouvant être obtenues par un procédé comprenant les étapes
a) mise à disposition d'un composant polymère (P), formé par
PS) 90 à 100% en poids (par rapport à P) d'un composant polymère de styrène présentant une température de transition vitreuse ≥ 130°C, qui est formé par
PS1) 30 à 100% en poids (par rapport à P) d'un ou de plusieurs polymères de Styropol contenant
(PS11) 60 à 85% en poids (par rapport à PS1) de styrène copolymérisé (PS11) ou d'alpha-méthylstyrène copolymérisé (PS12) ou d'un mélange copolymérisé d'alpha-méthylstyrène et de styrène (PS13),
(PS12) 15 à 40% en poids (par rapport à PS1) d'au moins un monomère copolymérisé du groupe formé par l'anhydride de l'acide maléique et les maléinimides et
PS2) 0 à 70% en poids (par rapport à P) d'un ou de plusieurs polymères de styrène différents de PS1, contenant
PS21) 60 à 82% en poids (par rapport à PS2) de styrène copolymérisé (PS11) ou d'alpha-méthylstyrène copolymérisé (PS12) ou d'un mélange copolymérisé de styrène et d'alpha-méthylstyrène (PS13) et
PS22) 18 à 40% en poids (par rapport à PS2) d'acrylonitrile copolymérisé et
PT) 0 à 10% en poids (par rapport à P) d'un ou de plusieurs polymères thermoplastiques du groupe constitué par les polyéthers aromatiques ; les polyoléfines ; les polyacrylates ; les polycarbonates (PC) ; les polyesters ; les polyamides ; les polyéthersulfones (PES) ; les polyéthercétones (PEK) et les polyéthersulfures (PES),
(b) chauffage du composant polymère (P) pour former une masse fondue polymère,
(c) introduction de 1 à 5% en poids (par rapport à P) d'un composant d'agent gonflant physique (T) dans la masse fondue polymère pour la formation d'une masse fondue pouvant être moussée,
(d) homogénéisation du mélange,
(e) le cas échéant addition d'additifs au composant polymère P dans au moins une des étapes a), b), c) et/ou d),
(f) extrusion de la masse fondue polymère contenant l'agent gonflant par une plaque d'injecteur,
(g) granulation de la masse fondue contenant l'agent gonflant dans une chambre remplie de liquide sous une pression de 1,5 à 15 bars en un granulat.

16. Particules polymères expansibles selon l'une quelconque des revendications 8 ou 9, les particules polymères étant un granulat expansible (G) présentant une teneur en azote ≤ 8% en poids (par rapport à (G)), dont les particules contiennent à chaque fois au moins 10 espaces creux par mm³ dans la plage de grosseurs de 1 à 200 µm et qui contiennent un composant polymère (P) présentant une température de transition vitreuse dans la plage de ≥ 105°C à 200°C, formé par
PS) 75 à 100% en poids (par rapport à P) d'un composant polymère de styrène qui est formé par
PS1) 10 à 100% en poids (par rapport à P) d'un ou de plusieurs polymères de styrène, contenant à chaque fois
PS11) 60 à 100% en poids (par rapport à PS1) de styrène copolymérisé (PS111) ou d'alpha-méthylstyrène copolymérisé (PS112) ou d'un mélange copolymérisé d'alpha-méthylstyrène et de styrène (PS113),
PS12) 0 à 90% en poids (par rapport à PS1) d'au moins un monomère copolymérisé du groupe formé par l'anhydride de l'acide maléique, les maléinimides, les (méth) acrylates de (C₁-C₁₀)-alkyle et l' acide (méth)acrylique,
PS2) 0 à 90% en poids (par rapport à P) d'un ou de plusieurs copolymères de styrène différents de PS1, contenant
PS21) 60 à 82% en poids (par rapport à PS2) de styrène copolymérisé (PS11) ou d'alpha-méthylstyrène copolymérisé (PS12) ou d'un mélange copolymérisé de styrène et d'alpha-méthylstyrène (PS13) et
PS22) 18 à 40% en poids (par rapport à PS2) d'acrylonitrile copolymérisé et
PT) 0 à 25% en poids (par rapport à P) d'un ou de plusieurs polymères thermoplastiques du groupe constitué par les polyéthers aromatiques, les polyoléfines, les polyacrylates, les polycarbonates (PC), les polyesters, les polyamides, les polyéthersulfones (PES), les polyéthercétones (PEK) et les polyéthersulfures (PES),
à condition qu'outre le composant PS11), au moins un des composants PS12, PS2 et PT doive être présent en une proportion d'au moins 5% en poids (à chaque fois respectivement par rapport à PS1, PS ou P).

17. Particules polymères expansibles selon l'une quelconque des revendications 1 à 16, présentant une teneur en agent gonflant entre 1 et 10% en poids.

18. Procédé pour la préparation de particules polymères expansibles selon l'une quelconque des revendications 1 à 17, le revêtement étant appliqué par aspersion ou au tambour.
